# FASCICULE DE BREVET EUROPEEN

(11) **EP 2 844 841 B1**
(45) Date de publication et mention de la délivrance du brevet: **18.05.2016**
(21) Numéro de dépôt: 13723867.1
(22) Date de dépôt: 25.04.2013
(51) Int. Cl.: F01D 5/28, F01D 5/14, F04D 29/38

(54) **RENFORT STRUCTUREL METALLIQUE D'AUBE EN COMPOSITE DE TURBOMACHINE**
METALLVESTÄRKUNG FÜR EINE KOMPOSITSCHAUFEL EINER TURBOMASCHINE
METAL REINFORCEMENT FOR A COMPOSITE BLADE OF A TURBOMACHINE

(30) Priorité: 30.04.2012 FR 1253977
(43) Date de publication de la demande: 11.03.2015
(73) Titulaire: Snecma, 75015 Paris (FR)
(72) Inventeur: KLEIN, Gilles, F-77550 Moissy-Cramayel cedex (FR); FRANCHET, Jean-Michel, F-77550 Moissy-Cramayel cedex (FR); MAGNAUDEIX, Dominique, F-77550 Moissy-Cramayel cedex (FR); LECONTE, Gilbert, F-77550 Moissy-Cramayel cedex (FR)
(74) Mandataire: David, Alain
(86) Numéro de dépôt international: PCT/FR2013/050917
(87) Numéro de publication internationale: WO 2013/164532

(56) Documents cités:
- EP-A1- 1 908 919
- FR-A1- 2 965 202
- GB-A- 2 484 726
- US-A- 5 725 354

## Description

### Arrière-plan de l'invention

Le domaine de l'invention est celui des turbomachines et plus particulièrement celui des aubes de turbomachine en matériau composite et la présente invention concerne plus particulièrement un renfort structurel métallique de bord d'attaque d'aube de turbomachine.

On rappelle que le bord d'attaque correspond à la partie antérieure d'un profil aérodynamique qui fait face au flux d'air et qui divise l'écoulement d'air en un écoulement d'air d'intrados et en un écoulement d'air extrados. Par opposition, le bord de fuite correspond à la partie postérieure d'un profil aérodynamique où se rejoignent les écoulements intrados et extrados.

Les aubes de turbomachine, et notamment les aubes de soufflante, subissent d'importantes contraintes, notamment mécaniques. Aussi, il est connu d'équiper les aubes de soufflante réalisées en matériau composite, d'un renfort structurel métallique s'étendant sur toute la hauteur du profil aérodynamique et épousant la forme du bord d'attaque, comme mentionné dans la demande FR2732406 au nom de la déposante. Un tel renfort structurel métallique permet de protéger l'aubage composite lors d'un impact d'un corps étranger sur la soufflante, tel que par exemple un oiseau, de la grêle ou encore des cailloux. En particulier, le renfort structurel métallique protège le bord d'attaque de l'aube en composite en évitant des risques de délaminage, de rupture de fibre ou encore d'endommagement par décohésion fibre/matrice.

De façon classique, le renfort structurel métallique est une pièce métallique en titane constituée de deux tôles matricées de type TA6V et soudées entre elles à haute température pour ne plus former qu'un unique bloc de matière. Or, une telle pièce ainsi rendue massive peut malgré tout lorsque la taille des aubes RTM augmente, notamment pour les turbomachines de très grandes dimensions, ou lorsque la longueur et la largeur de la pale augmentent sensiblement, manquer encore de résistance. En outre, elle présente alors une densité de matière unique qui n'est pas adaptée à la géométrie du bord d'attaque, laquelle varie selon sa hauteur.

Les documents EP1908919 et FR2965202 divulgent des renforts structurels d'aube en composite de turbomachine selon l'état de l'art.

### Objet et résumé de l'invention

Dans ce contexte, l'invention vise à pallier les inconvénients précités des renforts structurels actuels en proposant un renfort structurel métallique perfectionné dont la résistance est augmentée et dont la densité de matière peut être modifiée de façon simple et rapide.

Ce but est atteint grâce à un renfort structurel d'aube en composite de turbomachine destiné à être collé sur un bord d'attaque de ladite aube et présentant sur toute sa hauteur une section sensiblement en forme de V avec une base prolongée de deux flancs latéraux, caractérisé en ce qu'il comporte, monté dans au moins un logement de ladite base, un assemblage de plusieurs faisceaux de fibres définissant un taux de fibres variable sur toute la hauteur dudit logement.

Ainsi, la densité du renfort peut être adaptée à sa géométrie avec une densité plus élevée au niveau du haut de pale ou au contraire plus faible au niveau du pied de pale.

Avantageusement, les fibres composant un faisceau de fibres sont maintenues en position par au moins une bague disposée à chaque extrémité dudit faisceau de fibres et lesdites bagues présentent un diamètre croissant avec le nombre de faisceaux de fibres dont elles assurent le maintien.

De préférence, le renfort est constitué en deux parties destinées à être soudées entre elles à chaud, ledit au moins un logement destiné à recevoir lesdits faisceaux de fibres étant formé par la jonction lors de la soudure de deux gorges se faisant face pratiquées dans chacune desdites deux parties.

Selon le mode de réalisation considéré, ledit assemblage de plusieurs faisceaux de fibres peut comporter au moins deux faisceaux de fibres concentriques, l'un tubulaire ayant une première longueur et l'autre annulaire recouvrant en partie le premier faisceau de fibres et ayant une seconde longueur inférieure à ladite première longueur, de sorte à définir sur une longueur de recouvrement des premier et second faisceaux de fibres un premier taux de fibres et sur une longueur restante un second taux de fibres, ladite longueur de recouvrement pouvant être formée par ladite seconde longueur et ladite longueur restante est formée par ladite première longueur ou encore comporter quatre faisceaux de fibres concentriques, un quatrième faisceau de fibres annulaire ayant une quatrième longueur recouvrant en partie un troisième faisceau de fibres annulaire ayant une troisième longueur recouvrant lui-même en partie ledit second faisceau de fibres ayant une seconde longueur, de sorte à définir un troisième et un quatrième taux de fibres sur des longueurs de recouvrement des troisième et quatrième faisceaux de fibres respectivement.

De préférence, ledit logement forme un espace fermé s'étendant selon une direction longitudinale dudit renfort structurel et comporte un diamètre variant par paliers successifs adapté au diamètre du faisceau de fibres qu'il reçoit.

L'invention concerne également toute aube comportant un renfort structurel tel que précité et toute turbomachine comportant au moins une telle aube.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif et sur lesquels :
- la figure 1 représente une aube de soufflante de turbomachine en vue latérale ;
- les figures 2 et 3 sont des sections partielles de l'aube de la figure 1 montrant à deux hauteurs différentes un renfort structurel métallique du bord d'attaque conforme à l'invention ; et
- la figure 4 illustre un assemblage de faisceaux de fibres qui est mis en place dans un logement de la base du renfort structurel métallique de la figure 3 pour en faire varier la densité de matière.

### Description détaillée d'un mode de réalisation

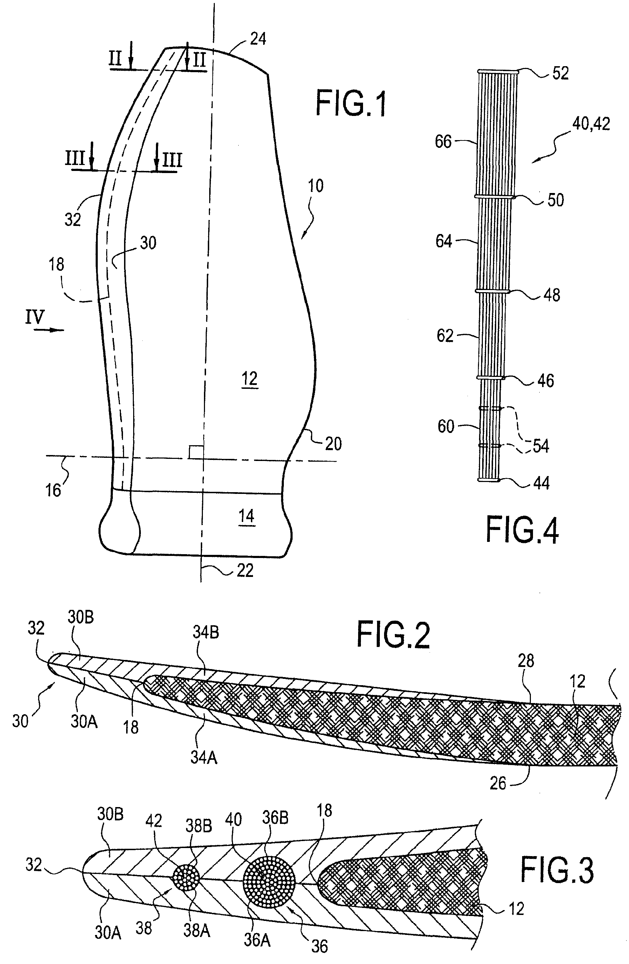

La figure 1 est une vue latérale d'une aube, par exemple une aube mobile de soufflante d'une turbomachine (non représentée), comportant un renfort structurel métallique de bord d'attaque selon l'invention. L'aube 10 comporte une surface aérodynamique ou pale 12 solidaire d'un pied 14 et s'étendant selon une première direction axiale 16 entre un bord d'attaque 18 et un bord de fuite 20 et selon une deuxième direction radiale 22 sensiblement perpendiculaire à la première direction 16 entre ce pied 14 et un sommet de l'aube 24. Les faces latérales de la pale 12 qui relient le bord d'attaque 18 au bord de fuite 20 constituent les faces extrados 26 et intrados 28 de l'aube.

Classiquement, la pale 12 est réalisée en un matériau composite obtenu par drapage ou mise en forme d'une texture fibreuse tissée. A titre d'exemple, le matériau composite utilisé peut être composé par un assemblage de fibres tissées de carbone et d'une matrice de résine époxyde, l'ensemble étant formé par moulage au moyen d'un procédé d'injection de résine de type RTM (pour "Resin Transfer Molding").

L'aube 10 comporte également un renfort structurel 30 collé au niveau du bord d'attaque 18 de la pale et qui s'étend à la fois selon la première direction 16 au-delà de ce bord d'attaque et selon la deuxième direction 22 entre le pied 14 et le sommet 24 de l'aube.

Comme représenté à la figure 2, le renfort structurel 30 épouse la forme du bord d'attaque 18 de la pale 12 de l'aube 10 qu'il prolonge pour former le bord d'attaque de l'aube 32. De façon classique, ce renfort structurel 30 est une pièce monobloc ou pouvant être, comme illustré, en deux parties 30A, 30B destinées à être soudées entre elles à chaud et comportant une section sensiblement en forme de V présentant une base dont le profil externe forme le bord d'attaque de l'aube 32 et le profil interne arrondi est apte à épouser la forme arrondie du bord d'attaque 18 de la pale 12. Cette base est prolongée par deux flancs latéraux 34A et 34B épousant l'intrados 26 et l'extrados 28 de l'aube et présentant un profil effilé ou aminci en direction du bord de fuite de l'aube.

Le renfort structurel 30 est métallique et préférentiellement à base titane de type TA6V. Ce matériau présente en effet une grande capacité d'absorption de l'énergie due aux chocs. Le renfort structurel 30 est collé sur la pale 12 au moyen de colle connue de l'homme du métier, comme par exemple une colle cyanoacrylique ou encore époxy.

Selon l'invention, et comme le montre la figure 3, le renfort structurel 30 comporte, monté dans au moins un logement 36, 38 de sa base (deux dans l'exemple illustré sans que ce nombre ne soit limitatif), un assemblage 40, 42 de plusieurs faisceaux de fibres définissant un taux de fibres variable sur toute la hauteur de ce logement. Ce ou ces logements s'étendent selon la seconde direction 22 de l'aube (correspondant à une direction longitudinale du renfort) sans toutefois déboucher au pied 14 ou au sommet 24 de l'aube, de sorte que dans cet espace fermé d'où aucune fibre ne peut sortir, l'intégrité et la continuité des fibres de l'assemblage 40, 42 puissent être garanties. En outre, les fibres n'étant pas contraintes entre elles par soudage, la mise en place de l'assemblage ne crée pas de rupture de fibres, notamment par cisaillement, possible source d'un départ de fissure.

On notera que du fait de la réalisation du renfort structurel 30 en deux parties 30A, 30B, le logement 36, 38 est en fait formé par la jonction, lors de la soudure de ces deux parties entre elles, de deux gorges 36A, 36B ; 38A, 38B se faisant face pratiquées dans chacune de ces deux parties et qui, une fois ces parties soudées, forment un espace fermé contenant l'assemblage de faisceaux de fibres 40, 42.

La section du logement (et *donc a fortiori* des deux gorges qui le forme) est avantageusement circulaire (donc semi-circulaire pour chaque gorge) mais peut cependant être modifiée aisément suivant les exigences géométriques ou de dimensionnement mécanique du renfort, et par exemple présenter une forme ovale, polygonale, etc.

Comme le montre la figure 4, les fibres composant les faisceaux de fibres de l'assemblage 40, 42 sont maintenues en position par des bagues 44, 46, 48, 50, 52 disposée au moins à chaque extrémité des faisceaux de fibres (des bagues intermédiaires supplémentaires 54 peuvent si nécessaire être ajoutées). Plus précisément, afin de suivre au mieux le profil de la pale 12, il est prévu un assemblage de quatre faisceaux de fibres permettant d'obtenir un nombre de fils décroissant par paliers successifs du sommet de l'aube 24 à son pied 14. Pour ce faire, un premier faisceau de fibres 60 central tubulaire ayant une première longueur correspondant à la longueur totale à remplir est recouvert en partie, c'est à dire sur une longueur inférieure à la précédente, par un deuxième faisceau de fibres 62 annulaire, lui-même recouvert en partie, sur une longueur inférieure à la précédente, par un troisième faisceau de fibres 64 annulaire, lui-même recouvert en partie, sur une longueur encore inférieure à la précédente, par un quatrième faisceau de fibres 66 annulaire. Ainsi, on définit trois longueurs de recouvrement au niveau desquels du fait même de ce recouvrement les taux de fibres sont différents du taux de fibres du premier faisceau de fibres. Pour maintenir ces fibres en position dans leur faisceau respectif, les bagues présentent un diamètre croissant avec le nombre de faisceaux de fibres dont elles assurent le maintien et pour que ces faisceaux de fibres soient eux même maintenus sans jeu, le logement comporte un diamètre variant par paliers successifs adapté au diamètre du faisceau de fibres qu'il reçoit.

A titre d'exemple, le premier faisceau de fibres peut contenir 40 fils de SiC de la longueur quasi-totale du renfort maintenus par un jeu de bagues de diamètre intérieur de 3mm, le deuxième faisceau de fibres 30 fils sur 70% de la longueur quasi-totale du renfort maintenus par un jeu de bagues de diamètre intérieur de 3,6mm, le troisième faisceau de fibres 30 fils sur 50% de la longueur quasi-totale du renfort maintenus par un jeu de bagues de diamètre intérieur de 4mm et le quatrième et dernier faisceau de fibres 30 fils sur 30% de la longueur quasi-totale du renfort maintenus par un jeu de bagues de diamètre intérieur de 4,2mm. L'assemblage ainsi formé est monté dans un logement d'un renfort structurel en titane TA6V du bord d'attaque d'une aube en fibre de carbone et matrice en résine époxyde.

Bien évidemment, l'exemple précédent est donné seulement à titre illustratif et le nombre de faisceaux, leur longueur et le taux de fibres seront choisis en fonction des caractéristiques recherchées pour le renfort structurel 30.

Si la description précitée a été illustrée par une aube de soufflante de turbomachine, il conviendra de noter que l'invention est également applicable à la réalisation d'un renfort structurel métallique destiné à renforcer un bord d'attaque ou un bord de fuite d'aube de tout type de turbomachine, terrestre ou aéronautique, et notamment un turbomoteur d'hélicoptère ou un turboréacteur d'avion mais également d'hélices telles que des hélices de double soufflantes contrarotatives non carénées. L'invention est également applicable à la réalisation de tous autres éléments de moteur, par exemple des pièces massives de structure comme les carters dont on souhaite modifier la densité de façon locale.

## Revendications

1. Renfort structurel (30) d'aube en composite de turbomachine destiné à être collé sur un bord d'attaque (18) de ladite aube (10) et présentant sur toute sa hauteur une section sensiblement en forme de V avec une base prolongée de deux flancs latéraux (34A, 34B), ladite base comportant au moins un logement (36, 38) s'étendant selon une direction longitudinale dudit renfort structurel, **caractérisé en ce qu'**il comporte, monté dans ledit au moins un logement, un assemblage (40, 42) de plusieurs faisceaux de fibres (60, 62, 64, 66) définissant un taux de fibres variable sur toute la hauteur dudit au moins un logement.

2. Renfort structurel selon la revendication 1, **caractérisé en ce que** les fibres composant les faisceaux de fibres sont maintenues en position par des bagues (44, 46, 48, 50, 52, 54) disposées au moins à chaque extrémité desdits faisceaux de fibres.

3. Renfort structurel selon la revendication 2, **caractérisé en ce que** lesdites bagues présentent un diamètre croissant avec le nombre de faisceaux de fibres dont elles assurent le maintien.

4. Renfort structurel selon la revendication 1, **caractérisé en ce qu'**il est constitué en deux parties (30A, 30B) destinées à être soudées entre elles à chaud, ledit au moins un logement destiné à recevoir lesdits faisceaux de fibres étant formé par la jonction lors de la soudure de deux gorges (36A, 36B ; 38A, 38B) se faisant face pratiquées dans chacune desdites deux parties.

5. Renfort structurel selon la revendication 4, **caractérisée en ce que** ledit logement comporte un diamètre variant par paliers successifs adapté au diamètre du faisceau de fibres qu'il reçoit.

6. Renfort structurel selon la revendication 1, **caractérisé en ce que** ledit assemblage de plusieurs faisceaux de fibres (40, 42) comporte au moins deux faisceaux de fibres concentriques, l'un tubulaire ayant une première longueur et l'autre annulaire recouvrant en partie le premier faisceau de fibres et ayant une seconde longueur inférieure à ladite première longueur, de sorte à définir sur une longueur de recouvrement des premier et second faisceaux de fibres un premier taux de fibres et sur une longueur restante un second taux de fibres.

7. Renfort structurel selon la revendication 6, **caractérisé en ce que** ladite longueur de recouvrement est formée par ladite seconde longueur et ladite longueur restante est formée par ladite première longueur moins ladite seconde longueur.

8. Renfort structurel selon la revendication 6, **caractérisé en ce que** ledit assemblage de plusieurs faisceaux de fibres comporte quatre faisceaux de fibres concentriques (60, 62, 64, 66), un quatrième faisceau de fibres annulaire ayant une quatrième longueur recouvrant en partie un troisième faisceau de fibres annulaire ayant une troisième longueur recouvrant lui-même en partie ledit second faisceau de fibres ayant une seconde longueur, de sorte à définir un troisième et un quatrième taux de fibres sur des longueurs de recouvrement des troisième et quatrième faisceaux de fibres respectivement.

9. Renfort structurel selon l'une quelconque des revendications 1 à 8, **caractérisé en ce que** ledit au moins un logement forme un espace fermé.

10. Aube de turbomachine comportant un renfort structurel selon l'une quelconque des revendications 1 à 9.

11. Turbomachine comportant au moins une aube selon la revendication 10.

## Patentansprüche

1. Strukturverstärkung (30) einer Turbomaschinenschaufel aus Verbundwerkstoff, die dazu bestimmt ist, auf eine Eintrittskante (18) der Schaufel (10) aufgeklebt zu werden, und die über ihre gesamte Höhe einen im Wesentlichen V-förmigen Querschnitt mit einer um zwei Seitenflanken (34A, 34B) verlängerten Basis aufweist, wobei die Basis wenigstens eine Aufnahme (36, 38), die sich in einer Längsrichtung der Strukturverstärkung erstreckt, umfasst, **dadurch gekennzeichnet, dass** sie, in der wenigstens einen Aufnahme angebracht, eine Anordnung (40, 42) aus mehreren Faserbündeln (60, 62, 64, 66), die einen veränderlichen Faseranteil über die gesamte Höhe der wenigstens einen Aufnahme definieren, umfasst.

2. Strukturverstärkung nach Anspruch 1, **dadurch gekennzeichnet, dass** die die Faserbündel bildenden Fasern durch Ringe (44, 46, 48, 50, 52, 54), welche wenigstens an jedem Ende der Faserbündel angeordnet sind, in Position gehalten sind.

3. Strukturverstärkung nach Anspruch 2, **dadurch gekennzeichnet, dass** die Ringe einen Durchmesser aufweisen, der mit der Anzahl an Faserbündeln, deren Halten sie sicherstellen, zunimmt.

4. Strukturverstärkung nach Anspruch 1, **dadurch gekennzeichnet, dass** sie aus zwei Teilen (30A, 30B) besteht, die dazu bestimmt sind, untereinander warm verschweißt zu werden, wobei die wenigstens eine Aufnahme, die dazu bestimmt ist, die Faserbündel aufzunehmen, durch das Verbinden von zwei sich gegenüberliegenden, in jedem der beiden Teile ausgebildeten Auskehlungen (36A, 36B; 38A, 38B) während des Schweißens gebildet wird.

5. Strukturverstärkung nach Anspruch 4, **dadurch gekennzeichnet, dass** die Aufnahme einen in aufeinanderfolgenden Stufen variierenden Durchmesser aufweist, der dem Durchmesser des Faserbündels, das sie aufnimmt, angepasst ist.

6. Strukturverstärkung nach Anspruch 1, **dadurch gekennzeichnet, dass** die Anordnung aus mehreren Faserbündeln (40, 42) wenigstens zwei konzentrische Faserbündel umfasst, wobei das eine rohrförmig ist, das eine erste Länge aufweist, und das andere ringförmig ist, das das erste Faserbündel teilweise überlappt und eine kleiner als die erste Länge ausgebildete zweite Länge aufweist, so dass über eine Überlappungslänge des ersten und des zweiten Faserbündels ein erster Faseranteil und über eine Restlänge ein zweiter Faseranteil definiert wird.

7. Strukturverstärkung nach Anspruch 6, **dadurch gekennzeichnet, dass** die Überlappungslänge durch die zweite Länge gebildet ist und die Restlänge durch die erste Länge minus die zweite Länge gebildet ist.

8. Strukturverstärkung nach Anspruch 6, **dadurch gekennzeichnet, dass** die Anordnung aus mehreren Faserbündeln vier konzentrische Faserbündel (60, 62, 64, 66) umfasst, wobei ein eine vierte Länge aufweisendes viertes ringförmiges Faserbündel ein eine dritte Länge aufweisendes drittes ringförmiges Faserbündel teilweise überlappt, das selbst das eine zweite Länge aufweisende zweite Faserbündel teilweise überlappt, so dass ein dritter und ein vierter Faseranteil über Überlappungslängen des dritten bzw. des vierten Faserbündels definiert werden.

9. Strukturverstärkung nach einem der Ansprüche 1 bis 8, **dadurch gekennzeichnet, dass** die wenigstens eine Aufnahme einen geschlossenen Raum bildet.

10. Turbomaschinenschaufel, die eine Strukturverstärkung nach einem der Ansprüche 1 bis 9 umfasst.

11. Turbomaschine, die wenigstens eine Schaufel nach Anspruch 10 umfasst.

## Claims

1. Structural reinforcement (30) for a composite blade of a turbine engine, the reinforcement being for adhesively bonding to a leading edge (18) of said blade (10) and presenting over its full height a section that is substantially V-shaped, having a base that is extended by two lateral flanks (34A, 34B), said base comprising at least one housing (36, 38) extending along a longitudinal direction of said structural reinforcement, the reinforcement being **characterized in that** it includes, mounted in said at least one housing, an assembly (40, 42) of a plurality of bundles of fibers (60, 62, 64, 66) defining fiber content that varies along the full height of said at least one housing.

2. Structural reinforcement according to claim 1, **characterized in that** the fibers making up the fiber bundles are held in position by rings (44, 46, 48, 50, 52, 54) arranged at least at each end of said fiber bundles.

3. Structural reinforcement according to claim 2, **characterized in that** said rings present diameters that increase with increasing number of fiber bundles that they serve to hold together.

4. Structural reinforcement according to claim 1, **characterized in that** it is made up of two portions (30A, 30B) for welding together, said at least one housing for receiving said fiber bundles being formed by joining together two mutually-facing grooves (36A, 36B; 38A, 38B) that are formed in respective ones of said two portions, the grooves being joined together during welding.

5. Structural reinforcement according to claim 4, **characterized in that** said housing includes a diameter that varies in successive stages to match the diameter of the fiber bundle it receives.

6. Structural reinforcement according to claim 1, **characterized in that** said assembly of a plurality of fiber bundles (40, 42) includes at least two concentric fiber bundles, a tubular bundle having a first length and an annular bundle covering part of the first fiber bundle and having a second length that is shorter than said first length, so as to define a first fiber content over an overlap length of the first and second fiber bundles, and a second fiber content over a remaining length.

7. Structural reinforcement according to claim 6, **characterized in that** said overlap length is formed by said second length and said remaining length is formed by said first length minus said second length.

8. Structural reinforcement according to claim 6, **characterized in that** said assembly of fiber bundles comprises four concentric fiber bundles (60, 62, 64, 66), an annular fourth fiber bundle having a fourth length covering a portion of an annular third fiber bundle having a third length, itself covering a portion of said second fiber bundle having a second length, so as to define third and fourth fiber contents along the overlap lengths of the third and fourth fiber bundles, respectively.

9. Structural reinforcement according to any one of claims 1 to 8, **characterized in that** said at least one housing forms a closed space.

10. A turbine engine blade including structural reinforcement according to any one of claims 1 to 9.

11. A turbine engine including at least one blade according to claim 10.
